# EUROPEAN PATENT SPECIFICATION

(11) **EP 1 782 514 B1**
(45) Date of publication and mention of the grant of the patent: **15.04.2009**
(21) Application number: 05786879.6
(22) Date of filing: 24.08.2005
(51) Int. Cl.: H02G 3/22, F16L 5/04

(54) **FIRE-PROTECTION ARRANGEMENT FOR AN INSTALLATION IN A PARTITION**
FEUERSCHUTZANORDNUNG FÜR EINE INSTALLATION IN EINER TRENNWAND
AGENCEMENT DE PROTECTION CONTRE LE FEU A INSTALLER DANS UNE CLOISON

(30) Priority: 24.08.2004 SE 0402060; 14.09.2004 US 522303 P; 02.05.2005 SE 0500996
(43) Date of publication of application: 09.05.2007
(73) Proprietor: MCT BRATTBERG AB, 371 92 KARLSKRONA (SE)
(72) Inventor: OLSSON, Roy, S-370 45 FÅGELMARA (SE); DOWER, John E, Frodsham Cheshire WA6 7LT (GB)
(74) Representative: Hyltner, Jan-Olof
(86) International application number: PCT/EP2005/054155
(87) International publication number: WO 2006/021567

(56) References cited:
- GB-A- 2 149 867
- US-A- 4 061 344
- US-A- 4 249 353
- US-A- 4 291 195

## Description

The invention relates to a fire-protection arrangement for an installation, for example a lead-through arrangement, for example for cables or pipes, in a partition, for example a wall (US 4 249 353).

### BACKGROUND ART

With more stringent fire safety requirements being introduced within a number of different areas, there is a need for new technical solutions to prevent or delay the spread of a fire, and/or to protect important installations in a structure in which a fire can occur. For example, a bushing for cables or pipes in a wall or a bulkhead can create an opening through which a fire can spread.

Concerning bushings, traditional cable bushings are described in, for example, US2732226, US3489440 or US4767086. Such bushings are used, for example, to lead cables through bulkheads in a vessel. With reference to the attached drawings (Figures 1 and 2) from US2732226, the cables (3) are accommodated in flexible packing elements (4) which, in turn, are supported by a rectangular frame (1) that is welded to the wall, plate or bulkhead (2) through which the cables are to be taken.

In spite of the fact that cable bushings of the type that is shown in US2732226 provide a high degree of fire protection, since the time of the development of this known solution, even more stringent requirements have been made concerning fire protection characteristics of cable bushings, which have created a need for additional solutions in order to increase the resistance to fire.

### SUMMARY

An object of the present invention is to improve the fire protection for installations, for example lead-through arrangements, for example for cables or pipes.

Another object of the invention is to improve the fire protection for installations, for example lead-through arrangements, for example for cables or pipes, while retaining good access to the installation.

This object is achieved with a fire-protection arrangement according to claim 1.

Tests have shown that, in the event of a fire on one side of a partition in the form of a wall or bulkhead, the partition is heated up whereby heat spreads in the plane of the partition. Thus, an installation in the partition can be heated up as a result of its contact with the partition. As explained in greater detail in the detailed description below, the fire-protection arrangement acts as a shield which, in the event of fire, suppresses the heating up of the partition around the installation, so that the heating up of the installation is in turn suppressed.

The design according to the invention, in which the fire-protection arrangement surrounds the installation, means that the fire-protection arrangement can be designed in such a way that the installation is not completely covered, but is accessible, for example for inspection.

The fire-protection arrangement has preferably an extent parallel to the partition that is greater than its extent perpendicular to the partition. By this means, the shielding characteristics of the fire-protection arrangement are further increased.

The fire-protection arrangement is preferably in contact with the partition. By means of its contact with the partition, the fire-protection arrangement will absorb at least a part of the heat that would otherwise have spread to the installation. In this way, the heating up of the installation is suppressed. As a result, in the case of the installation being a bushing, spreading of the fire is prevented or delayed.

At least a part of the fire-protection arrangement is preferably constructed of a non-combustible material. This further reduces the risk of the fire spreading to the installation or delays its spread. The combustible material preferably surrounds the installation.

The fire-protection arrangement preferably extends further out from the partition than the installation. This, in combination with the fact that the fire-protection arrangement at least partially surrounds the installation, means that a space is created outside the installation, which space is delimited by the part of the fire-protection arrangement that projects beyond the installation. Tests have shown that, in the event of a fire, the temperature in such a space is lower than in the surrounding gas, which in turn means that the temperature in the installation, which is adjacent to the said delimited space, is lower. By this means, the spread of the fire to the installation is prevented or delayed.

The fire-protection arrangement preferably comprises a plurality of frame elements that are arranged, when the fire-protection arrangement is mounted, to be arranged in contact with each other and in sequence around the perimeter of the installation, with at least one cover element being provided to cover at least a part of a joint between two frame elements. The fact that the fire-protection arrangement comprises frame elements means that it can be provided as a modular system in which a simple adaptation can be carried out to the size of a specific installation, by means of a suitable combination of a plurality of frame elements. However, in the event of a fire, it is possible for the partition to be deformed out of its plane, for example by buckling, so that it has locally a curved shape. This can result in the frame elements assuming a tilted position in relation to each other, which in turn means that the distance between the joints increases, in other words there are gaps between them. By providing a cover element that covers at least a part of a joint between two frame elements, in the event of a fire, a flame is prevented from penetrating into a gap between the frame elements and, in this way, the heating up of the partition is reduced.

The cover element is preferably arranged to extend on the outside of the frame elements, and along the joint, and to be attached to the partition. By this means, the cover element can also act as a fixing element for the frame elements.

The fire-protection arrangement preferably comprises a plurality of frame elements that are arranged, when the fire-protection arrangement is mounted, to be arranged in contact with each other and in sequence around the perimeter of the installation, with at least one engagement element being arranged in at least one joint between two frame elements, with the engagement element having a shape that at least partially corresponds to the shape of at least one recess in at least one of the frame elements. This means that displacement between the frame elements is prevented or made more difficult, in particular relative displacement in a direction that is parallel to the plane of the division between two frame elements and parallel to the partition. This increases the stability of the fire-protection arrangement, in particular in the event of a fire, as deformations in the partition caused by heat have a tendency to move the frame elements in relation to each other.

The fire-protection arrangement preferably comprises a plurality of layers that are arranged parallel to the partition when the fire-protection arrangement is mounted, with at least one of the layers being a layer with low heat conductivity.

### BRIEF DESCRIPTION OF DRAWINGS

The invention will be described in greater detail below with reference to the attached drawings, in which:
Figures 1 and 2 show a view from in front and a sectioned view respectively of a cable lead-through arrangement according to known technology,
Figure 3 shows a view from in front of a fire-protection arrangement, according to an embodiment of the invention, for a cable lead-through arrangement,
Figure 4 shows a sectioned view, with the section taken along the line IV-IV in Figure 3,
Figure 5 shows a view from in front of a fire-protection arrangement, according to an alternative embodiment of the invention,
Figure 6 shows a sectioned view, with the section taken along the line VI-VI in Figure 5, and
Figure 7 shows schematically a cross-section of a part of the fire-protection arrangement in Figures 5 and 6 in the event of deformation of the partition caused by heat.

### MODE(S) FOR CARRYING OUT THE INVENTION

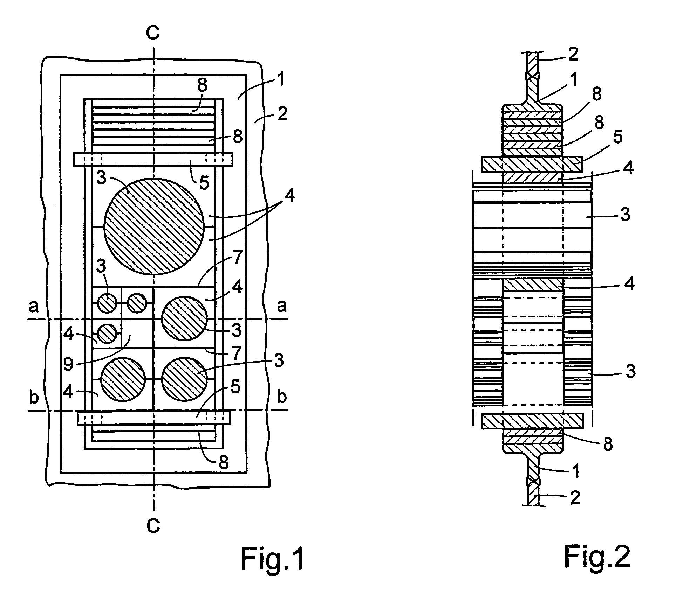

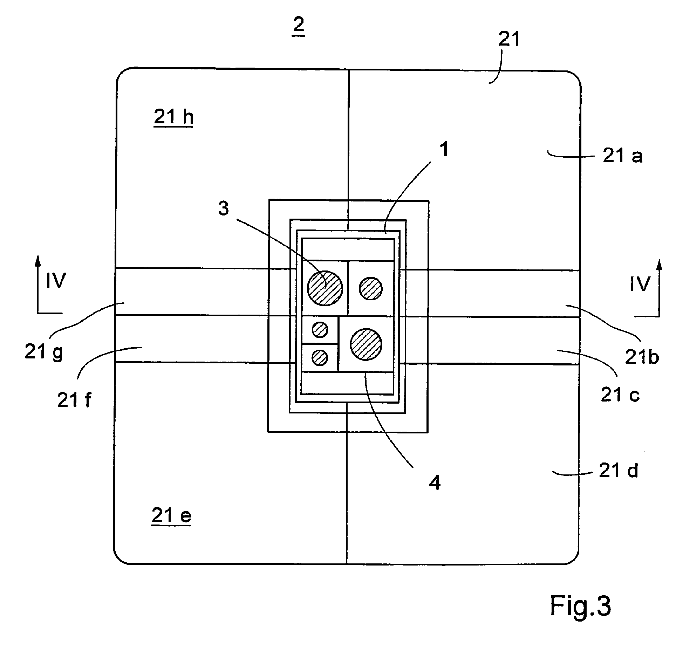

Figure 3 shows a fire-protection arrangement 21 according to an embodiment of the invention, in the form of a protective frame 21, mounted on one side of a partition 2 in the form of a wall 2. The partition can also be a bulkhead, a ceiling, a floor or a deck. The protective frame 21 surrounds an installation 1, 4 in the form of a cable lead-through arrangement 1, 4, comprising a frame 1 that supports flexible packing elements 4, which, in turn, support cables 3 according to known technology, see also the description in the introduction above with reference to Figures 1 and 2.

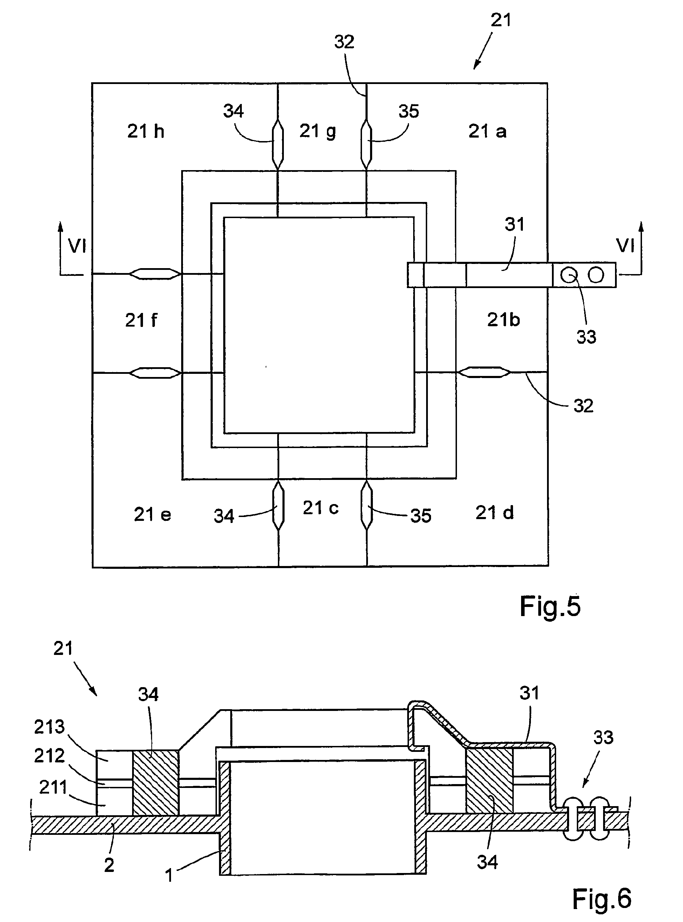

The protective frame 21 can be mounted by means of any suitable fixing arrangement, for example a welded joint, bolt connection or in the way that is described below with reference to Figures 5 and 6.

The protective frame 21 comprises frame elements 21a-21h which are arranged to lie adjacent to each other around the perimeter of the frame. These frame elements 21a-21h can be comprised in a modular system, by means of which protective frames can be adapted to installations 1, 4 of different sizes. Alternatively, the protective frame 21 can, of course, consist of one continuous element.

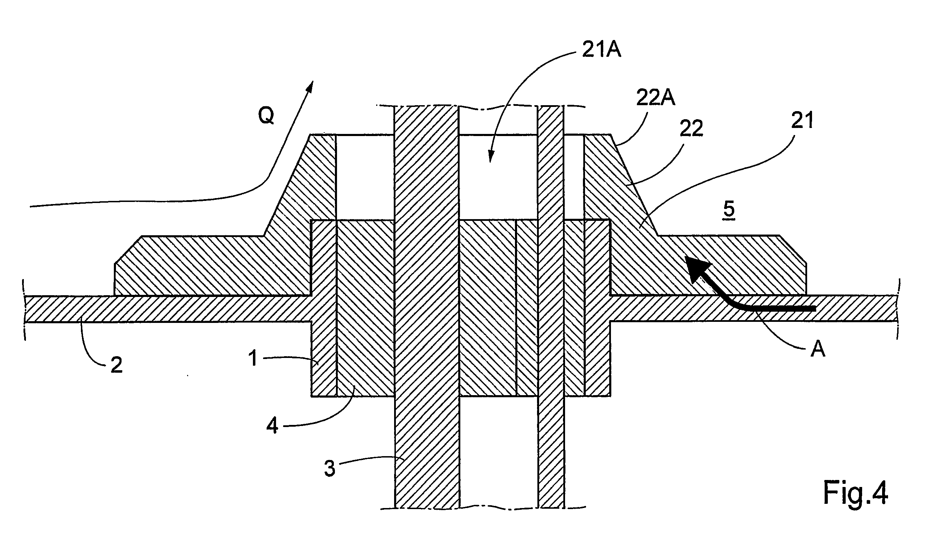

The protective frame 21 acts as a shield that, in the event of a fire, suppresses the transmission of heat from one area (in Figure 4 indicated by the reference numeral 5), that is adjacent to the wall 2 and the cable lead-through arrangement 1, 4, to the wall 2, and thereby suppresses the heating up of the wall 2, so that the heating up of the cable lead-through arrangement 1, 4 is suppressed in turn. The protective frame 21 has preferably an extent parallel to the wall 2 that is greater than its extent perpendicular to the wall 2. The relatively large extent parallel to the wall 2 means that the shielding characteristics of the protective frame are further increased.

As shown in Figure 4, the protective frame 21 is in contact with the wall 2. By this means, the protective frame 21 can absorb heat that spreads through the wall 2, and in this way reduce the transmission of heat to the cable lead-through arrangement 1, 4 which is illustrated with the arrow A in Figure 4. By this means, the spread of the fire to the cable lead-through arrangement 1, 4 is prevented or delayed and the spread of the fire to the other side of the wall 2 is thus made more difficult. The protective frame 21 is preferably in contact with the wall 2 around essentially the whole cable lead-through arrangement 1, 4.

The protective frame is provided with a flange 22 so that the protective frame 21 extends further out from the wall 2 than the cable lead-through arrangement 1, 4. This, in combination with the fact that the protective frame 21 surrounds the cable lead-through arrangement 1, 4, means that a space 21A is created outside the cable lead-through arrangement 1, 4, which space is delimited by the part of the protective frame 21 that projects beyond the cable lead-through arrangement 1, 4. As pointed out above, in the event of a fire, the temperature in such a space 21A is lower than in the surrounding gas, which reduces the heating up of the cable lead-through arrangement 1, 4.

The flange 22 has an inclined outer side 22A and thereby serves to guide a flame or heat that approaches along the wall 2 away from the cable lead-through arrangement 1, 4, which is illustrated by the arrow Q in Figure 4.

As shown in Figures 3 and 4, the protective frame 21 is open at its central part, which means that easy access to the cable lead-through arrangement 1, 4 is possible. In other words, the invention provides increased fire protection of the installation without a reduction in the ability to access the installation, for example for inspection, repairs or other measures.

Figures 5 and 6 show a fire-protection arrangement 21 according to a further embodiment of the invention, in the form of a protective frame 21. The embodiment shown in Figures 5 and 6 conforms in many respects to the embodiment described above with reference to Figures 3 and 4. The protective frame 21 is thus mounted on one side of a partition 2 and surrounds a frame 1 comprised in an installation in the form of a cable lead-through arrangement, with the frame being arranged to support flexible packing elements (not shown in Figures 5 and 6) as described above.

As in the embodiment described above, the protective frame 21 comprises frame elements 21a-21h. The frame elements 21a-21h are arranged adjacent to each other and in sequence around the perimeter of the installation 1. Figures 5 and 6 show a cover element 31 in the form of a stainless steel strip. The cover element 31 extends along a joint 32 between two frame elements 21a, 21b, on the outside of the frame elements 21a, 21b and thereby covers the joint 32 on the outside of the frame elements. Figure 5 shows only one cover element, for the purpose of illustration, but a cover element is preferably provided at each joint 32 between two frame elements. Alternatively, one cover element can have an extent that is such that it covers more than one joint 32.

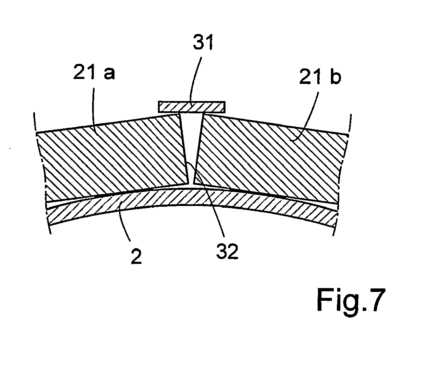

Figure 7 illustrates (with exaggerated displacements for the sake of clarity) one of the functions of the cover element 31. In the event of a fire, it is possible for the partition 2 to buckle, so that it has locally a curved shape. This can mean that the frame elements 21a, 21b assume a tilted position in relation to each other, which, in turn, means that a gap is created in the joint 32 between the frame elements. The cover element 31 thereby prevents a flame from penetrating into the gap and, in this way, reduces the spread of heat to the partition 2.

The cover element 31 is attached to the partition 2 by means of a screw connection 33. By this means, the cover element 31 can also act as a fixing element for the frame elements 21a, 21 b. Of course, alternatively, rivets, welding or some other suitable means can be used for attaching the cover element to the partition 2.

In the example shown in Figures 5 and 6, there is an engagement element 34 placed in each joint 32 between two frame elements 21a-21h. The engagement element 34 has a shape that corresponds to the shape of the recesses 35 in the adjacent frame elements, in such a way that the engagement element engages the frame elements. This means that displacement between the frame elements is prevented or made more difficult, in particular relative displacement in a direction that is parallel to the plane of the division between two frame elements and parallel to the partition. This increases the stability of the fire-protection arrangement 21, in particular in the event of a fire, as deformations in the partition 2 caused by heat have a tendency to move the frame elements 21a-21h in relation to each other.

In this example, each engagement element extends from the partition 2 when mounted and has a hexagonal cross section and is arranged symmetrically in the plane of the division between two frame elements 21a-21h. However, several alternative shapes are possible for the engagement elements, for example with rectangular, elliptical or asymmetrically rounded or polygonal cross sections. In addition, each engagement element can be designed as a projecting part permanently attached to a frame element, which part is arranged to engage with a recess arranged in an adjacent frame element, which recess has a shape that corresponds to the shape of the projecting part.

In this example, only one engagement element 34 is shown in each joint 32, but of course several engagement elements can alternatively be provided in each joint, with a corresponding number of recesses being provided in the frame elements at the respective joints.

As shown in Figure 6, the fire-protection arrangement 21 comprises several layers 211, 212, 213 that are oriented parallel to the partition 2 when mounted. More specifically, the fire-protection arrangement 21 comprises an inner layer 211, an intermediate layer 212 and an outer layer 213. The inner and the outer layers 211, 213 comprise a non-combustible material, for example a material that is marketed under the trademark "Comfire" by Marine Systems Technology Ltd. in Great Britain. The intermediate layer 212 comprises material with low heat conductivity and acts as a heat shield to reduce the spread of heat towards the partition 2.

## Claims

1. Fire-protection arrangement (21) for an installation (1, 4), for example a lead-through arrangement, for example for cables or pipes, in a partition (2), for example a wall, **characterized in that** it is arranged to be mounted on one side of the partition (2) in such a way that it at least partially surrounds the installation (1, 4) whereby access to the installation (1, 4) is allowed, and **in that** the fire-protection arrangement (21) extends further out from the partition (2) than the installation (1, 4), whereby a space (21A) is created outside the installation (1, 4), which space (21A) acts to lower the temperature of the installation (1, 4) in the event of fire.

2. Fire-protection arrangement (21) according to claim 1, which has an extent parallel to the partition (2) that is greater than its extent perpendicular to the partition (2).

3. Fire-protection arrangement (21) according to any one of the preceding claims, which is in contact with the partition (2).

4. Fire-protection arrangement (21) according to any one of the preceding claims, in which at least a part of the fire-protection arrangement is constructed of a non-combustible material.

5. Fire-protection arrangement (21) according to any one of the preceding claims, which comprises a plurality of frame elements (21a-21h) that are arranged, when the fire-protection arrangement is mounted, to be arranged in contact with each other and in sequence around the perimeter of the installation, with at least one cover element (31) being provided to cover at least a part of a joint (32) between two frame elements (21a-21h).

6. Fire-protection arrangement (21) according to claim 5, in which the cover element (31) is arranged to extend on the outside of the frame elements, and along the joint, and to be attached to the partition (2).

7. Fire-protection arrangement (21) according to any one of the preceding claims, which comprises a plurality of frame elements (21a-21h) that are arranged, when the fire-protection arrangement is mounted, to be arranged in contact with each other and in sequence around the perimeter of the installation, with at least one engagement element (34) being arranged in at least one joint (32) between two frame elements (21a-21h), with the engagement element (34) having a shape that at least partially corresponds to the shape of at least one recess (35) in at least one of the frame elements.

8. Fire-protection arrangement (21) according to any one of the preceding claims, which comprises a plurality of layers (211, 212, 213) that are arranged parallel to the partition (2) when the fire-protection arrangement is mounted, with at least one of the layers being a layer (212) with low heat conductivity.

## Patentansprüche

1. Brandschutzanordnung (21) für eine Installation (1, 4), beispielsweise eine Durchführungsanordnung, beispielsweise für Kabel oder Rohre, in einer Trennwand (2), beispielsweise einer Mauer, **dadurch gekennzeichnet, daß** sie zur Montage auf einer Seite der Trennwand (2) so angeordnet ist, daß sie die Installation (1, 4) mindestens teilweise umgibt, wodurch Zugang zur Installation (1, 4) ermöglicht ist, und **dadurch**, daß sich die Brandschutzanordnung (21) von der Trennwand (2) weiter nach außen als die Installation (1, 4) erstreckt, wodurch ein Raum (21A) außerhalb der Installation (1, 4) geschaffen ist, wobei der Raum (21A) so wirkt, daß er die Temperatur der Installation (1, 4) im Brandfall senkt.

2. Brandschutzanordnung (21) nach Anspruch 1, die eine Ausdehnung parallel zur Trennwand (2) hat, die größer als ihre Ausdehnung senkrecht zur Trennwand (2) ist.

3. Brandschutzanordnung (21) nach einem der vorstehenden Ansprüche, die in Kontakt mit der Trennwand (2) steht.

4. Brandschutzanordnung (21) nach einem der vorstehenden Ansprüche, wobei mindestens ein Teil der Brandschutzanordnung aus einem nicht brennbaren Material aufgebaut ist.

5. Brandschutzanordnung (21) nach einem der vorstehenden Ansprüche, die mehrere Rahmenelemente (21a-21h) aufweist, die bei Montage der Brandschutzanordnung so angeordnet sind, daß sie in Kontakt miteinander und nacheinander um den Umfang der Installation angeordnet sind, wobei mindestens ein Abdeckelement (31) vorgesehen ist, um mindestens einen Teil einer Fuge bzw. Fügestelle (32) zwischen zwei Rahmenelementen (21a-21h) abzudecken.

6. Brandschutzanordnung (21) nach Anspruch 5, wobei das Abdeckelement (31) so angeordnet ist, daß es sich auf der Außenseite der Rahmenelemente und entlang der Fuge bzw. Fügestelle erstreckt und an der Trennwand (2) angebracht ist.

7. Brandschutzanordnung (21) nach einem der vorstehenden Ansprüche, die mehrere Rahmenelemente (21a-21h) aufweist, die bei Montage der Brandschutzanordnung so angeordnet sind, daß sie in Kontakt miteinander und nacheinander um den Umfang der Installation angeordnet sind, wobei mindestens ein Eingriffselement (34) in mindestens einer Fuge bzw. Fügestelle (32) zwischen zwei Rahmenelementen (21a-21h) angeordnet ist, wobei das Eingriffselement (34) eine Form hat, die der Form mindestens einer Aussparung (35) in mindestens einem der Rahmenelemente mindestens teilweise entspricht.

8. Brandschutzanordnung (21) nach einem der vorstehenden Ansprüche, die mehrere Schichten (211, 212, 213) aufweist, die bei Montage der Brandschutzanordnung parallel zur Trennwand (2) angeordnet sind, wobei mindestens eine der Schichten eine Schicht (212) mit niedriger Wärmeleitfähigkeit ist.

## Revendications

1. Agencement de protection contre le feu (21) pour une installation (1, 4), par exemple, un agencement traversant, destinée par exemple à des câbles ou à des tuyaux, dans une cloison (2), par exemple, un mur, **caractérisé en ce que** ledit agencement est disposé de manière à être monté d'un côté de la cloison (2), pour entourer au moins en partie l'installation (1, 4), ce qui permet d'accéder à l'installation (1, 4) et **en ce que** l'agencement de protection contre le feu (21) dépasse plus en dehors de la cloison (2) que l'installation (1, 4), créant ainsi un espace (21A) en dehors de l'installation (1, 4), ledit espace (21 A) servant à abaisser la température de l'installation (1, 4) en cas d'incendie.

2. Agencement de protection contre le feu (21) selon la revendication 1 comportant une extension parallèle à la cloison (2) qui est supérieure à son extension perpendiculaire à la cloison (2).

3. Agencement de protection contre le feu (21) selon l'une quelconque des revendications précédentes, qui est en contact avec la cloison (2).

4. Agencement de protection contre le feu (21) selon l'une quelconque des revendications précédentes, dans laquelle au moins une partie de l'agencement de protection contre le feu est constituée d'un matériau non combustible.

5. Agencement de protection contre le feu (21) selon l'une quelconque des revendications précédentes comprenant une pluralité d'éléments de cadre (21a-21h) configurés, lorsque l'agencement de protection contre le feu est monté, de manière à être disposés au contact les uns des autres et dans l'ordre autour du périmètre de l'installation, un élément de recouvrement (31) au moins étant prévu pour recouvrir au moins une partie d'un joint (32) entre deux éléments de cadre (21a-21h).

6. Agencement de protection contre le feu (21) selon la revendication 5, dans lequel l'élément de recouvrement (31) est configuré de manière à se prolonger à l'extérieur des éléments de cadre, et le long du joint, et à être fixé à la cloison (2).

7. Agencement de protection contre le feu (21) selon l'une quelconque des revendications précédentes comprenant une pluralité d'éléments de cadre (21a-21h) configurés, lorsque l'agencement de protection contre le feu est monté, de manière à être disposés au contact les uns des autres et dans l'ordre autour du périmètre de l'installation, un élément de mise en contact (34) au moins étant arrangé dans au moins un joint (32) entre deux éléments de cadre (21a-21h), l'élément de mise en contact (34) ayant une forme qui correspond au moins en partie à la forme d'au moins une cavité (35) aménagée dans au moins l'un des éléments de cadre.

8. Agencement de protection contre le feu (21) selon l'une quelconque des revendications précédentes comprenant une pluralité de couches (211, 212, 213) disposées parallèlement à la cloison (2) lorsque l'agencement de protection contre le feu est monté, au moins l'une des couches étant une couche (212) présentant une faible conductivité thermique.
